# EUROPEAN PATENT SPECIFICATION

(11) **EP 3 447 032 B1**
(45) Date of publication and mention of the grant of the patent: **14.08.2024**
(21) Application number: 16905924.3
(22) Date of filing: 30.06.2016
(51) Int. Cl.: C03B 5/24, C03B 5/04, C03B 5/235, F27B 9/40, F27B 3/28, F27D 19/00, F27D 99/00

(54) **GLASS TANK FURNACE**
GLASWANNENOFEN
FOUR VERRIER À BASSIN

(30) Priority: 22.06.2016 CN 201610474169
(43) Date of publication of application: 27.02.2019
(73) Proprietor: Jushi Group Co., Ltd., Tongxiang, Zhejiang 314500 (CN)
(72) Inventor: SHEN, Peijun, Tongxiang City Zhejiang 314500 (CN); FANG, Changying, Tongxiang City Zhejiang 314500 (CN)
(74) Representative: Manitz Finsterwald Patent- und Rechtsanwaltspartnerschaft mbB
(86) International application number: PCT/CN2016/087860
(87) International publication number: WO 2017/219384

(56) References cited:
- WO-A1-2009/040599
- WO-A1-99/31021
- CN-A- 103 508 652
- CN-A- 106 116 109
- CN-U- 201 737 825
- CN-U- 203 128 389
- CN-U- 204 490 716
- US-A- 3 856 496
- US-A1- 2014 000 316
- DATABASE WPI Week 201568, 22 July 2015 Derwent World Patents Index; AN 2015-557701, XP002795806
- DATABASE WPI Week 201441, 15 January 2014 Derwent World Patents Index; AN 2014-E81859, XP002795807

## Description

The present application claims priority to Chinese Patent Application No. 201610474169.X filed to State Intellectual Property Office on June 22, 2016 and entitled "GLASS TANK FURNACE AND GLASS MELTING METHOD".

### Technical Field of the present invention

The present invention relates to the technical field of glass tank furnaces, and in particular to a glass tank furnace and a glass melting method. The features of the preamble of the independent claim are known from CN 204 490 716 U. Related technologies are known from WO 99/31021 A1, US 2014/000316 A1 and CN 103 508 652 A.

### Background of the present invention

A glass tank furnace structure includes a batch feeder, a melting portion, a flue, a passageway, and burners and electrodes provided on the furnace. The batch feeder is disposed on a front wall or breast walls at two sides of the melting portion, the flue is disposed on the breast walls at two sides or the front wall of the melting portion, and the burners are disposed on the breast walls at two sides of the melting portion. The flame from the burners is parallel to the level of liquid glass. The electrodes for auxiliary heating are arranged on the bottom of the melting portion.

The melting of glass is to heat the glass batch in the furnace to a high temperature by the burners to obtain uniform liquid glass, the bubbles, textures and stones of which are all controlled within a certain range and conform to the molding requirements. Meanwhile, after the electrodes arranged on the bottom are powered on, the current generates joule heat through the liquid glass to auxiliary heat the liquid glass in the bottom of the furnace. The double-heated liquid glass reaches a bushing in the passageway through a throat, to be drawn and formed.

In such a glass tank furnace structure, the burners are disposed on the breast walls at two sides of the melting portion; the flame from the burners is parallel to the glass batch or the level of the liquid glass in the melting portion; and, the raw glass material or the liquid glass is mainly heated by radiative heat transfer. As a result, the heat utilization is low, and the heat of the flame radiated onto the raw glass material or the level of the liquid glass will not be utilized maximally, resulting in high energy consumption. How to improve the heat utilization and stability of the burners and the heat receiving effect of the level of liquid glass is a technical problem to be solved.

### Summary of the present invention

In order to solve the above technical problem, the present invention provides a glass tank furnace as defined in the independent claim

It is provided a glass tank furnace, including a melting portion, wherein the melting portion includes a melting tank; at least one burner mounted on a crown is provided in the melting tank; the burner is provided with a gas fuel conduit for supplying gas fuel and an oxygen conduit for supplying oxygen; a gas fuel flowmeter and a gas fuel control valve are provided on the gas fuel conduit; an oxygen flowmeter and an oxygen control valve are provided on the oxygen conduit; and, the gas fuel flowmeter, the gas fuel control valve, the oxygen flowmeter and the oxygen control valve are all connected to a control unit;
the gas fuel flowmeter is configured to transmit the detected gas fuel flow to the control unit;
the oxygen flowmeter is configured to transmit the detected oxygen flow to the control unit;
the control unit is configured to receive the gas fuel flow from the gas fuel flowmeter, receive the oxygen flow from the oxygen flowmeter, according to the gas fuel flow and the oxygen flow, determine a control signal for the gas fuel control valve or the oxygen control valve or determine a control signal for the gas fuel control valve and a control signal for the oxygen control valve, and transmit the corresponding control signal to the gas fuel control valve or the oxygen control valve or transmit the corresponding control signal to the gas fuel control valve and the corresponding control signal to the oxygen control valve;
the gas fuel control valve is configured to receive the control signal and then perform valve control according to the control signal; and
the oxygen control valve is configured to receive the control signal and then perform valve control according to the control signal.

Wherein, the control unit is further configured to, when determining a control signal for the gas fuel control valve or the oxygen control valve or when dertermining a control signal for the gas fuel control valve and a control signal for the oxygen control valve, when it is determined that a ratio of the gas fuel flow to the oxygen flow is greater than a preset ratio range, determine a control signal for decreasing the valve opening of the gas fuel control valve or a control signal for increasing the valve opening of the oxygen control valve; when it is determined that the ratio of the gas fuel flow to the oxygen flow is less than the preset ratio range, determine a control signal for increasing the valve opening of the gas fuel control valve or a control signal for decreasing the valve opening of the oxygen control valve; and, when it is determined that the ratio of the gas fuel flow to the oxygen flow is within the preset ratio range, determine a control signal for maintaining the valve opening of the gas fuel control valve and a control signal for maintaining the valve opening of the oxygen control valve.

Wherein, the preset ratio range is 1:3 to 1:2.

Wherein, a gas fuel conduit and an oxygen conduit of a burner mounted at the center of the crown within the melting tank form a concentric structure; the gas fuel conduit is an inner conduit of the concentric structure, and the oxygen conduit is an outer conduit of the concentric structure; and, an included angle between a gas fuel conduit and an oxygen conduit of each of burners mounted on two sides of the crown within the melting tank is 0° to 5°.

Wherein, the melting tank is configured to be divided into the following zones along a liquid glass flow direction: a first zone used as a raw material zone, a second zone used as a foam zone and a third zone used as a clarification zone; at least one burner is disposed at a position on the crown above the first zone; at least one burner is disposed at a position on the crown above the second zone; and, at least one burner is disposed at a position on the crown above the third zone.

Wherein, the control unit is further configured to determine a gas fuel flow rate and an oxygen flow rate according to the gas fuel flow and the oxygen flow and then determine a control signal for the gas fuel control valve and a control signal for the oxygen control valve so that a difference between the gas fuel flow rate and the oxygen flow rate is less than 10% of the gas fuel flow rate or the oxygen flow rate.

Wherein, an angle between an injection direction of the burner and each of breast walls at two sides of the glass tank furnace is 0° to 14°, and an angle between the injection direction of the burner and each of a front wall and a rear wall of the glass tank furnace is 0°.

A glass melting method using the glass tank furnace described above is provided, including steps of:
providing, in a melting tank, at least one burner mounted on a crown; mounting a burner, when at the center of the crown, having a gas fuel conduit and an oxygen conduit with the gas fuel conduit and the oxygen conduit forming a concentric structure, and mounting a burner or burners, when on either of the two sides of the crown, each having a gas fuel conduit and an oxygen conduit with the gas fuel conduit and the oxygen conduit forming an included angle of 0° to 5°;
providing a gas fuel flowmeter and a gas fuel control valve on the gas fuel conduit of each burner, providing an oxygen flowmeter and an oxygen control valve on the oxygen conduit of each burner, and providing a control unit connected to all of the gas fuel flowmeter, the gas fuel control valve, the oxygen flowmeter and the oxygen control valve of each burner; and
by the control unit, receiving a gas fuel flow from the gas fuel flowmeter of the burner, receiving an oxygen flow from the oxygen flowmeter, according to the gas fuel flow and the oxygen flow, determining a control signal for the gas fuel control valve or the oxygen control valve of the burner or determining a control signal for the gas fuel control valve and a control signal for the oxygen control valve, and correspondingly controlling the gas fuel control valve and/or the oxygen control valve.

Wherein, the step of according to the gas fuel flow and the oxygen flow, determining a control signal for the gas fuel control valve or the oxygen control valve of the burner or determining a control signal for the gas fuel control valve and a control signal for the oxygen control valve and correspondingly controlling the gas fuel control valve and/or the oxygen control valve comprises: when it is determined that a ratio of the gas fuel flow to the oxygen flow is greater than a preset ratio range, performing control of decreasing the valve opening of the gas fuel control valve or performing control of increasing the valve opening of the oxygen control valve; when it is determined that the ratio of the gas fuel flow to the oxygen flow is less than the preset ratio range, performing control of increasing the valve opening of the gas fuel control valve or performing control of decreasing the valve opening of the oxygen control valve; and, when it is determined that the ratio of the gas fuel flow to the oxygen flow is within the preset ratio range, maintaining the valve opening of the gas fuel control valve and the valve opening of the oxygen control valve, and the preset ratio range is 1:3 to 1:2.

Wherein, the method further includes steps of: determining a gas fuel flow rate and an oxygen flow rate according to the gas fuel flow and the oxygen flow, and then determining a control signal for the gas fuel control valve and a control signal for the oxygen control valve so that a difference between the gas fuel flow rate and the oxygen flow rate is less than 10% of the gas fuel flow rate or the oxygen flow rate.

In the present invention, by detecting in real time and controlling a gas fuel flow and an oxygen flow of a burner, the heat output of the burner is stabilized, and the heat utilization is improved. Different composition structures of gas fuel conduits and the oxygen conduit are provided for burners in the center of and at two sides of a crown, so that the heat receiving effect of the level of liquid glass is improved.

### Brief Description of the Drawings

The accompanying drawings incorporated into the description and constituting a part of the description show the embodiments of the present invention, and are used for explaining the principle of the present invention in combination with the description. In these accompanying drawings, similar reference numerals represent similar elements. The accompanying drawings described hereinafter are some of but not all of the embodiments of the present invention. A person of ordinary skill in the art can obtain other drawings according to these drawings without paying any creative effort.
Fig. 1 is a structural diagram of a glass tank furnace in an embodiment;
Fig. 2 is a schematic view of a connection between burners and a control unit in an embodiment; and
Fig. 3 is a flowchart of a glass melting method in an embodiment.

### Detailed Description of the present invention

To make the objectives, technical solutions and advantages of the embodiments of the present invention clearer, the technical solutions in the embodiments of the present invention will be described clearly and completely in conjunction with the drawings in the embodiments of the present invention. Apparently, the described embodiments are some of but not all of the embodiments of the present invention. All other embodiments obtained by a person of ordinary skill in the art based on the embodiments of the present invention without paying any creative effort shall fall into the protection scope of the present invention. It is to be noted that the embodiments in the present application and the features in the embodiments can be combined at will if not conflict.

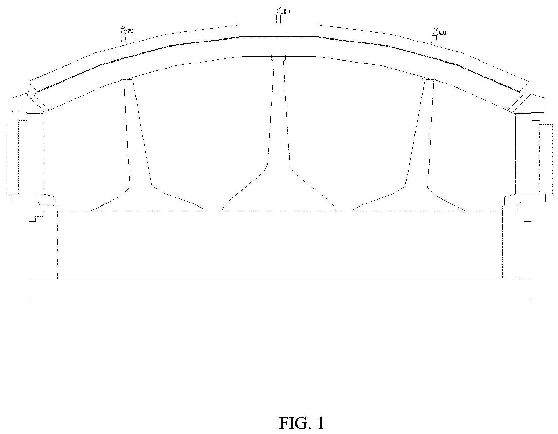

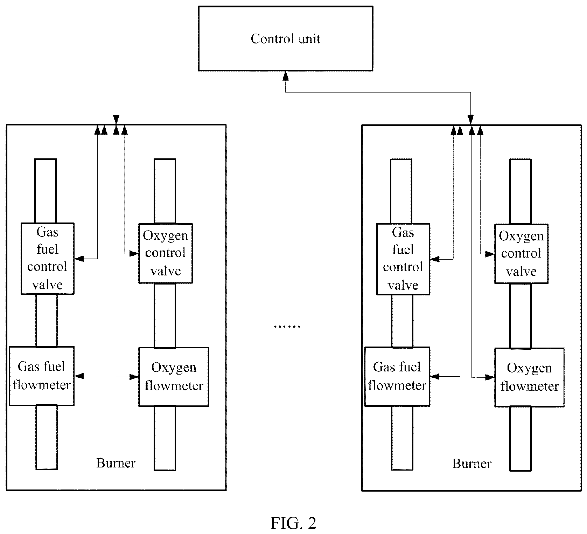

Fig. 1 is a structural diagram of a glass tank furnace in an embodiment. Fig. 2 is a schematic view of a connection between burners and a control unit in this embodiment. With references to Figs. 1 and 2, the glass tank furnace includes a melting portion. The melting portion includes a melting tank. At least one burner mounted on a crown is provided in the melting tank. The burner is provided with a gas fuel conduit for supplying gas fuel and an oxygen conduit for supplying oxygen. A gas fuel flowmeter and a gas fuel control valve are provided on the gas fuel conduit. An oxygen flowmeter and an oxygen control valve are provided on the oxygen conduit. The gas fuel flowmeter, the gas fuel control valve, the oxygen flowmeter and the oxygen control valve are all connected to a control unit.

The gas fuel flowmeter is configured to transmit the detected gas fuel flow to the control unit.

The oxygen flowmeter is configured to transmit the detected oxygen flow to the control unit.

The control unit is configured to receive the gas fuel flow from the gas fuel flowmeter, receive the oxygen flow from the oxygen flowmeter, determine, according to the gas fuel flow and the oxygen flow, a control signal for the gas fuel control valve or the oxygen control valve or control signals for the gas fuel control valve and the oxygen control valve respectively, and transmit a corresponding control signal to the gas fuel control valve or the oxygen control valve or corresponding control signals for the gas fuel control valve and the oxygen control valve respectively.

The gas fuel control valve is configured to receive the control signal and then perform valve control according to the control signal.

The oxygen control valve is configured to receive the control signal and then perform valve control according to the control signal.

Determining, by the control unit and according to the gas fuel flow and the oxygen flow, a control signal for the gas fuel control valve or a control signal for the oxygen control valve or control signals for the gas fuel control valve and the oxygen control valve respectively includes: when it is determined that a ratio of the gas fuel flow to the oxygen flow is greater than a preset ratio range, determining a control signal for decreasing the valve opening of the gas fuel control valve or a control signal for increasing the valve opening of the oxygen control valve; when it is determined that the ratio of the gas fuel flow to the oxygen flow is less than the preset ratio range, determining a control signal for increasing the valve opening of the gas fuel control valve or a control signal for decreasing the valve opening of the oxygen control valve; and, when it is determined that the ratio of the gas fuel flow to the oxygen flow is within the preset ratio range, determining a control signal for maintaining the valve opening of the gas fuel control valve and a control signal for maintaining the valve opening of the oxygen control valve. The preset ratio range is 1:3 to 1:2, preferably 1:2.5 to 1:2.

The positions of different burners in the glass tank furnace are related to the partition of the melting tank. The melting tank is divided into the following zones along a liquid glass flow direction: a first zone used as a raw material zone, a second zone used as a foam zone and a third zone used as a clarification zone. At least one burner is disposed at a position on the crown above the first zone, at least one burner is disposed at a position on the crown above the second zone, and at least one burner is disposed at a position on the crown above the third zone.

In another embodiment, in combination with the mounting positions of the burners, gas fuel conduits and oxygen conduits of the burners at different positions in the glass tank furnace are configured in different structures. A gas fuel conduit and an oxygen conduit of a burner mounted in the center of the crown within the melting tank form a concentric structure; the gas fuel conduit is an inner conduit of the concentric structure, and the oxygen conduit is an outer conduit of the concentric structure. An included angle between a gas fuel conduit and an oxygen conduit of burners mounted on two sides of the crown within the melting tank is 0° to 5°. By this arrangement, Different composition structures of gas fuel conduits and the oxygen conduit are provided for burners at the center of and on two sides of a crown, so that the heat receiving effect of the level of liquid glass can be improved.

In another embodiment, the control unit in the glass tank furnace may also control a gas fuel flow rate and an oxygen flow rate. Specifically, the control unit is further configured to determine a gas fuel flow rate and an oxygen flow rate according to the gas fuel flow and the oxygen flow, and then determine a control signal for the gas fuel control valve and a control signal for the oxygen control valve so that a difference between the gas fuel flow rate and the oxygen flow rate is less than 10% of the gas fuel flow rate or the oxygen flow rate.

In another embodiment, an angle between an injection direction of the burner arranged in the glass tank furnace and each breast wall at two sides of the glass tank furnace is 0° to 14°, and an angle between the injection direction of the burner and each of a front wall and a rear wall of the glass tank furnace is 0°.

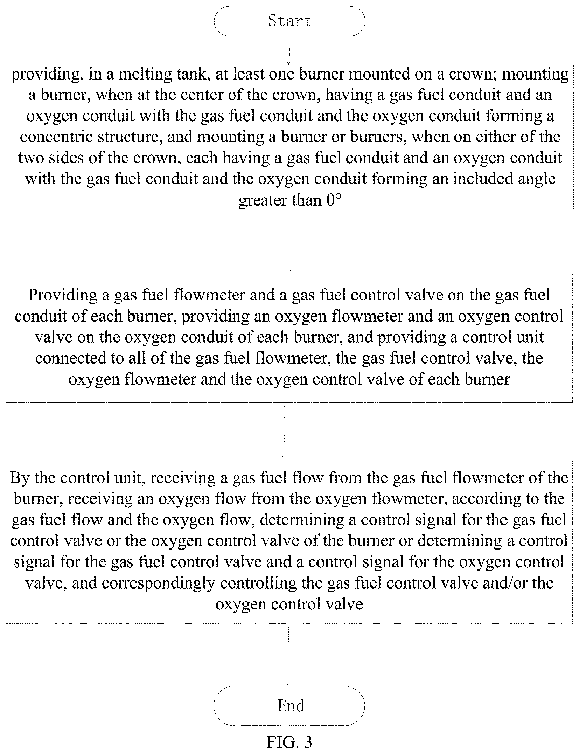

Fig. 3 is a flowchart of a glass melting method in an embodiment. A glass melting method using the glass tank furnace described above is provided, including the following steps.

Step 1: At least one burner mounted on a crown is provided within a melting tank; a burner having a gas fuel conduit and an oxygen conduit that form a concentric structure is mounted at the center of the crown; and burners each having a gas fuel conduit and an oxygen conduit that form an included angle greater than 0° are mounted on two sides of the crown.

Step 2: A gas fuel flowmeter and a gas fuel control valve are provided on the gas fuel conduit of each burner; an oxygen flowmeter and an oxygen control valve are provided on the oxygen conduit of each burner; and a control unit connected to all of the gas fuel flowmeter, the gas fuel control valve, the oxygen flowmeter and the oxygen control valve of each burner is provided.

Step 3: The control unit receives a gas fuel flow from the gas fuel flowmeter of the burner, receives an oxygen flow from the oxygen flowmeter, determines, according to the gas fuel flow and the oxygen flow, a control signal for the gas fuel control valve or the oxygen control valve of the burner or control signals for the gas fuel control valve and the oxygen control valve respectively, and correspondingly controls the gas fuel control valve and/or the oxygen control valve.

Specifically, the step 2 of determining, according to the gas fuel flow and the oxygen flow, a control signal for the gas fuel control valve or the oxygen control valve of the burner or control signals for the gas fuel control valve and the oxygen control valve respectively and correspondingly controlling the gas fuel control valve and/or the oxygen control valve includes: when it is determined that a ratio of the gas fuel flow to the oxygen flow is greater than a preset ratio range, controlling the decrease of the valve opening of the gas fuel control valve or controlling the increase of the valve opening of the oxygen control valve; when it is determined that the ratio of the gas fuel flow to the oxygen flow is less than the preset ratio range, controlling the increase of the valve opening of the gas fuel control valve or controlling the decrease of the valve opening of the oxygen control valve; and, when it is determined that the ratio of the gas fuel flow to the oxygen flow is within the preset ratio range, maintaining the valve opening of the gas fuel control valve and the valve opening of the oxygen control valve, where the preset ratio range is 1:3 to 1:2, preferably 1:2.5 to 1:2.

In order to control the burning degree of the gas fuel and oxygen, the method further includes steps of: determining a gas fuel flow rate and an oxygen flow rate according to the gas fuel flow and the oxygen flow, and then determining a control signal for the gas fuel control valve and a control signal for the oxygen control valve so that a difference between the gas fuel flow rate and the oxygen flow rate is less than 10% of the gas fuel flow rate or the oxygen flow rate.

### Specific implementation 1

On a crown of a glass tank furnace, a burner is disposed at a position above a first zone, a burner is disposed at a position above a second zone, and a burner is disposed at a position above a third zone. An angle between an injection direction of each burner and each breast wall at two sides the glass tank furnace is 12°, and an angle between the injection direction of each burner and each of a front wall and a rear wall of the glass tank furnace is 0°. A gas fuel conduit and an oxygen conduit of the burner at the center of the crown above the second zone form a concentric structure. The gas fuel conduit is an inner conduit of the concentric structure, and the oxygen conduit is an outer conduit of the concentric structure. An included angle between the gas fuel conduits of the burners on two sides of the crown and respectively above the first zone and the third zone is 3°. The control unit obtains a gas fuel flow and an oxygen flow in real time and then controls a valve of a gas fuel control valve and a valve of an oxygen control valve, so that a preset ratio range of the gas fuel flow and the oxygen flow is 1:2.4 to 1:2.2. The control unit decreases the valve opening of the gas fuel control valve or increases the valve opening of the oxygen control valve when it is determined that the ratio of the gas fuel flow to the oxygen flow is greater than the preset ratio range; and, increases the valve opening of the gas fuel control valve or decreases the valve opening of the oxygen control valve when the ratio of the gas fuel flow to the oxygen flow is less than the preset ratio range.

### Specific implementation 2

On a crown of a glass tank furnace, a burner is disposed at a position above a first zone, a burner is disposed at a position above a second zone, and a burner is disposed at a position above a third zone. An angle between an injection direction of each burner and each breast wall at two sides the glass tank furnace is 5°, and an angle between the injection direction of each burner and each of a front wall and a rear wall of the glass tank furnace is 0°. A gas fuel conduit and an oxygen conduit of the burner at the center of the crown above the second zone form a concentric structure. The gas fuel conduit is an inner conduit of the concentric structure, and the oxygen conduit is an outer conduit of the concentric structure. An included angle between the gas fuel conduits of the burners on two sides of the crown and respectively above the first zone and the third zone is 4°. The control unit obtains a gas fuel flow and an oxygen flow in real time and then controls a valve of a gas fuel control valve and a valve of an oxygen control valve, so that a preset ratio of the gas fuel flow to the oxygen flow is 1:2.4 to 1:2.3. The control unit decreases the valve opening of the gas fuel control valve or increases the valve opening of the oxygen control valve when it is determined that the ratio of the gas fuel flow to the oxygen flow is greater than the preset ratio range; and, increases the valve opening of the gas fuel control valve or decreases the valve opening of the oxygen control valve when the ratio of the gas fuel flow to the oxygen flow is less than the preset ratio range.

### Specific implementation 3

On a crown of a glass tank furnace, a burner is disposed at a position above a first zone, a burner is disposed at a position above a second zone, and a burner is disposed at a position above a third zone. An angle between an injection direction of each burner and each breast wall at two sides the glass tank furnace is 10°, and an angle between the injection direction of each burner and each of a front wall and a rear wall of the glass tank furnace is 0°. A gas fuel conduit and an oxygen conduit of the burner at the center of the crown above the second zone form a concentric structure. The gas fuel conduit is an inner conduit of the concentric structure, and the oxygen conduit is an outer conduit of the concentric structure. An included angle between the gas fuel conduits of the burners on two sides of the crown and respectively above the first zone and the third zone is 4°. The control unit obtains a gas fuel flow and an oxygen flow in real time and then controls a valve of a gas fuel control valve and a valve of an oxygen control valve, so that a preset ratio of the gas fuel flow to the oxygen flow is 1:2.25 to 1:2.1. The control unit decreases the valve opening of the gas fuel control valve or increases the valve opening of the oxygen control valve when it is determined that the ratio of the gas fuel flow to the oxygen flow is greater than the preset ratio range; and, increases the valve opening of the gas fuel control valve or decreases the valve opening of the oxygen control valve when the ratio of the gas fuel flow to the oxygen flow is less than the preset ratio range.

In the present invention, by detecting in real time and controlling a gas fuel flow and an oxygen flow of a burner, the heat output of the burner is stabilized, and the heat utilization is improved. Different composition structures of gas fuel conduits and the oxygen conduit are provided for burners at the center of and on two sides of a crown, so that the heat receiving effect of the level of liquid glass is improved.

The contents described above can be implemented independently or jointly in various ways, and these transformations shall fall into the protection scope of the present invention.

Moreover, the term "comprise/comprising", "contain/containing" or any other variants thereof is non-exclusive, so that an object or device containing a series of elements not only contains these elements, but also contains other elements not listed clearly, or further contains inherent elements of this object or device. Without more restrictions, an element defined by the term "comprising ..." does not exclude other identical elements in the object or device including this element.

The foregoing embodiments are merely used for describing the technical solutions of the present invention and not intended to constitute any limitations thereto. The present invention has been described in detail with reference to the preferred embodiments. It should be understood by a person of ordinary skill in the art that modifications or equivalent replacements can be made to the technical solutions of the present invention without departing from the scope of the technical solutions of the present invention, and these modifications or equivalent replacements are limited as defined by the claims of the present invention.

### INDUSTRIAL APPLICABILITY

In the present invention, by detecting in real time and controlling a gas fuel flow and an oxygen flow of a burner, the heat output of the burner is stabilized, and the heat utilization is improved. Different composition structures of gas fuel conduits and the oxygen conduit are provided for burners at the center of and on two sides of a crown, so that the heat receiving effect of the level of liquid glass is improved.

## Claims

1. A glass tank furnace, comprising a melting portion, the melting portion comprising a melting tank, at least one burner mounted on a crown is provided in the melting tank; the burner is provided with a gas fuel conduit for supplying gas fuel and an oxygen conduit for supplying oxygen; a gas fuel flowmeter and a gas fuel control valve are provided on the gas fuel conduit; an oxygen flowmeter and an oxygen control valve are provided on the oxygen conduit; and, the gas fuel flowmeter, the gas fuel control valve, the oxygen flowmeter and the oxygen control valve are all connected to a control unit;
the gas fuel flowmeter is configured to transmit the detected gas fuel flow to the control unit;
the oxygen flowmeter is configured to transmit the detected oxygen flow to the control unit;
the control unit is configured to receive the gas fuel flow from the gas fuel flowmeter, receive the oxygen flow from the oxygen flowmeter, according to the gas fuel flow and the oxygen flow, determine a control signal for the gas fuel control valve or the oxygen control valve or determine a control signal for the gas fuel control valve and a control signal for the oxygen control valve, and transmit the corresponding control signal to the gas fuel control valve or the oxygen control valve or transmit the corresponding control signal to the gas fuel control valve and the corresponding control signal to the oxygen control valve;
the gas fuel control valve is configured to receive the control signal and then perform valve control according to the control signal; and
the oxygen control valve is configured to receive the control signal and then perform valve control according to the control signal,
at least one burner is mounted on either of the two sides of the crown,
**characterized in that**
at least one burner is mounted at the center of the crown, and the gas fuel conduit and the oxygen conduit of the burner mounted at the center of the crown within the melting tank form a concentric structure; the gas fuel conduit is an inner conduit of the concentric structure, and the oxygen conduit is an outer conduit of the concentric structure;
an included angle between the gas fuel conduit and the oxygen conduit of the burner mounted on either of the two sides of the crown within the melting tank is greater than 0° and smaller than or equal to 5°.

2. The glass tank furnace according to claim 1, wherein,
the control unit is further configured to, when determining a control signal for the gas fuel control valve or the oxygen control valve or when determining a control signal for the gas fuel control valve and a control signal for the oxygen control valve: when it is determined that a ratio of the gas fuel flow to the oxygen flow is greater than a preset ratio range, determine a control signal for decreasing the valve opening of the gas fuel control valve or a control signal for increasing the valve opening of the oxygen control valve; when it is determined that the ratio of the gas fuel flow to the oxygen flow is less than the preset ratio range, determine a control signal for increasing the valve opening of the gas fuel control valve or a control signal for decreasing the valve opening of the oxygen control valve; and, when it is determined that the ratio of the gas fuel flow to the oxygen flow is within the preset ratio range, determine a control signal for maintaining the valve opening of the gas fuel control valve and a control signal for maintaining the valve opening of the oxygen control valve.

3. The glass tank furnace according to claim 2, wherein,
the preset ratio range is 1:3 to 1:2.

4. The glass tank furnace according to claim 1, wherein,
the melting tank is configured to be divided into the following zones along a liquid glass flow direction: a first zone used as a raw material zone, a second zone used as a foam zone and a third zone used as a clarification zone; at least one burner is disposed at a position on the crown above the first zone; at least one burner is disposed at a position on the crown above the second zone; and, at least one burner is disposed at a position on the crown above the third zone.

5. The glass tank furnace according to claim 1, wherein,
the control unit is further configured to determine a gas fuel flow rate and an oxygen flow rate according to the gas fuel flow and the oxygen flow, and then determine a control signal for the gas fuel control valve and a control signal for the oxygen control valve so that a difference between the gas fuel flow rate and the oxygen flow rate is less than 10% of the gas fuel flow rate or the oxygen flow rate.

6. The glass tank furnace according to claim 1, wherein,
an angle between an injection direction of the burner and each of breast walls at two sides of the glass tank furnace is 0° to 14°, and an angle between the injection direction of the burner and each of a front wall and a rear wall of the glass tank furnace is 0°.

## Patentansprüche

1. Glastankofen, umfassend einen Schmelzabschnitt, wobei der Schmelzabschnitt einen Schmelztank umfasst, wobei mindestens ein Brenner, der an einer Krone montiert ist, in dem Schmelztank vorgesehen ist; wobei der Brenner mit einer Gasbrennstoffleitung zum Zuführen von Gasbrennstoff und einer Sauerstoffleitung zum Zuführen von Sauerstoff versehen ist; wobei ein Gasbrennstoff-Durchflussmesser und ein Gasbrennstoff-Steuerventil an der Gasbrennstoffleitung vorgesehen sind; wobei ein Sauerstoff-Durchflussmesser und ein Sauerstoff-Steuerventil an der Sauerstoffleitung vorgesehen sind; und wobei der Gasbrennstoff-Durchflussmesser, das Gasbrennstoff-Steuerventil, der Sauerstoff-Durchflussmesser und das Sauerstoff-Steuerventil alle mit einer Steuereinheit verbunden sind;
wobei der Gasbrennstoff-Durchflussmesser konfiguriert ist, um den erfassten Gasbrennstoffdurchfluss an die Steuereinheit zu übertragen;
wobei der Sauerstoff-Durchflussmesser konfiguriert ist, um den erfassten Sauerstoffdurchfluss an die Steuereinheit zu übertragen;
wobei die Steuereinheit konfiguriert ist, um den Gasbrennstoffdurchfluss von dem Gasbrennstoff-Durchflussmesser zu empfangen, den Sauerstoffdurchfluss von dem Sauerstoff-Durchflussmesser zu empfangen, gemäß dem Gasbrennstoffdurchfluss und dem Sauerstoffdurchfluss ein Steuersignal für das Gasbrennstoff-Steuerventil oder das Sauerstoff-Steuerventil zu bestimmen oder ein Steuersignal für das Gasbrennstoff-Steuerventil und ein Steuersignal für das Sauerstoff-Steuerventil zu bestimmen und das entsprechende Steuersignal an das Gasbrennstoff-Steuerventil oder das Sauerstoff-Steuerventil zu übertragen oder das entsprechende Steuersignal an das Gasbrennstoff-Steuerventil und das entsprechende Steuersignal an das Sauerstoff-Steuerventil zu übertragen;
wobei das Gasbrennstoff-Steuerventil konfiguriert ist, um das Steuersignal zu empfangen und dann eine Ventilsteuerung gemäß dem Steuersignal durchzuführen; und
wobei das Sauerstoff-Steuerventil konfiguriert ist, um das Steuersignal zu empfangen und dann eine Ventilsteuerung gemäß dem Steuersignal durchzuführen,
wobei mindestens ein Brenner auf einer der beiden Seiten der Krone montiert ist, **dadurch gekennzeichnet, dass**
mindestens ein Brenner im Zentrum der Krone montiert ist und die Gasbrennstoffleitung und die Sauerstoffleitung des Brenners, der im Zentrum der Krone innerhalb des Schmelztanks montiert ist, einen konzentrischen Aufbau bilden; wobei die Gasbrennstoffleitung eine innere Leitung des konzentrischen Aufbaus ist und die Sauerstoffleitung eine äußere Leitung des konzentrischen Aufbaus ist;
wobei ein eingeschlossener Winkel zwischen der Gasbrennstoffleitung und der Sauerstoffleitung des Brenners, der auf einer der beiden Seiten der Krone innerhalb des Schmelztanks montiert ist, größer als 0° und kleiner als oder gleich 5° ist.

2. Glastankofen nach Anspruch 1, wobei
die Steuereinheit ferner konfiguriert ist, um, wenn ein Steuersignal für das Gasbrennstoff-Steuerventil oder das Sauerstoff-Steuerventil bestimmt wird oder wenn ein Steuersignal für das Gasbrennstoff-Steuerventil und ein Steuersignal für das Sauerstoff-Steuerventil bestimmt wird: wenn bestimmt wird, dass ein Verhältnis des Gasbrennstoffdurchflusses zu dem Sauerstoffdurchfluss größer als ein voreingestellter Verhältnisbereich ist, ein Steuersignal zum Verringern der Ventilöffnung des Gasbrennstoff-Steuerventils oder ein Steuersignal zum Erhöhen der Ventilöffnung des Sauerstoff-Steuerventils zu bestimmen; wenn bestimmt wird, dass das Verhältnis des Gasbrennstoffdurchflusses zu dem Sauerstoffdurchfluss kleiner als der voreingestellte Verhältnisbereich ist, ein Steuersignal zum Erhöhen der Ventilöffnung des Gasbrennstoff-Steuerventils oder ein Steuersignal zum Verringern der Ventilöffnung des Sauerstoff-Steuerventils zu bestimmen; und wenn bestimmt wird, dass das Verhältnis des Gasbrennstoffdurchflusses zu dem Sauerstoffdurchfluss innerhalb des voreingestellten Verhältnisbereichs ist, ein Steuersignal zum Aufrechterhalten der Ventilöffnung des Gasbrennstoff-Steuerventils und ein Steuersignal zum Aufrechterhalten der Ventilöffnung des Sauerstoff-Steuerventils zu bestimmen.

3. Glastankofen nach Anspruch 2, wobei
der voreingestellte Verhältnisbereich 1:3 bis 1:2 beträgt.

4. Glastankofen nach Anspruch 1, wobei
der Schmelztank konfiguriert ist, um entlang einer Flüssigglasströmungsrichtung in die folgenden Zonen unterteilt zu werden: eine erste Zone, die als eine Rohmaterialzone verwendet wird, eine zweite Zone, die als eine Schaumzone verwendet wird, und eine dritte Zone, die als eine Klärzone verwendet wird; wobei mindestens ein Brenner an einer Position an der Krone über der ersten Zone angeordnet ist; wobei mindestens ein Brenner an einer Position an der Krone über der zweiten Zone angeordnet ist; und wobei mindestens ein Brenner an einer Position an der Krone über der dritten Zone angeordnet ist.

5. Glastankofen nach Anspruch 1, wobei
die Steuereinheit ferner konfiguriert ist, um eine Gasbrennstoffdurchflussrate und eine Sauerstoffdurchflussrate gemäß dem Gasbrennstoffdurchfluss und dem Sauerstoffdurchfluss zu bestimmen und dann ein Steuersignal für das Gasbrennstoff-Steuerventil und ein Steuersignal für das Sauerstoff-Steuerventil zu bestimmen, so dass eine Differenz zwischen der Gasbrennstoffdurchflussrate und der Sauerstoffdurchflussrate kleiner als 10 % der Gasbrennstoffdurchflussrate oder der Sauerstoffdurchflussrate ist.

6. Glastankofen nach Anspruch 1, wobei
ein Winkel zwischen einer Einspritzrichtung des Brenners und jeder von Brüstungswänden an zwei Seiten des Glastankofens 0° bis 14° beträgt und ein Winkel zwischen der Einspritzrichtung des Brenners und jeder von einer vorderen Wand und einer hinteren Wand des Glastankofens 0° beträgt.

## Revendications

1. Four à bassin pour verre, comprenant une portion de fusion, la portion de fusion comprenant un bassin de fusion, au moins un brûleur monté sur une couronne étant prévu dans le bassin de fusion ; le brûleur est doté d'une conduite à combustible gazeux destinée à alimenter un combustible gazeux et d'une conduite à oxygène destinée à alimenter de l'oxygène ; un débitmètre à combustible gazeux et une vanne de commande de combustible gazeux sont prévus sur la conduite à combustible gazeux ; un débitmètre à oxygène et une vanne de commande d'oxygène sont prévus sur la conduite à oxygène ; et, le débitmètre à combustible gazeux, la vanne de commande de combustible gazeux, le débitmètre à oxygène et la vanne de commande d'oxygène sont tous connectés à une unité de commande ;
le débitmètre à combustible gazeux est configuré pour transmettre l'écoulement de combustible gazeux détecté à l'unité de commande ;
le débitmètre à oxygène est configuré pour transmettre l'écoulement d'oxygène détecté à l'unité de commande ;
l'unité de commande est configurée pour recevoir l'écoulement de combustible gazeux provenant du débitmètre à combustible gazeux, pour recevoir l'écoulement d'oxygène provenant du débitmètre à oxygène, conformément à l'écoulement de combustible gazeux et à l'écoulement d'oxygène, pour déterminer un signal de commande pour la vanne de commande de combustible gazeux ou la vanne de commande d'oxygène ou pour déterminer un signal de commande pour la vanne de commande de combustible gazeux et un signal de commande pour la vanne de commande d'oxygène, et pour transmettre le signal de commande correspondant à la vanne de commande de combustible gazeux ou à la vanne de commande d'oxygène ou pour transmettre le signal de commande correspondant à la vanne de commande de combustible gazeux et le signal de commande correspondant à la vanne de commande d'oxygène ;
la vanne de commande de combustible gazeux est configurée pour recevoir le signal de commande et pour ensuite effectuer une commande de vanne conformément au signal de commande ; et
la vanne de commande d'oxygène est configurée pour recevoir le signal de commande et pour ensuite effectuer une commande de vanne conformément au signal de commande,
au moins un brûleur est monté sur l'un ou l'autre des deux côtés de la couronne,
**caractérisé en ce que**
au moins un brûleur est monté au centre de la couronne, et la conduite à combustible gazeux et la conduite à oxygène du brûleur monté au centre de la couronne à l'intérieur du bassin de fusion forment une structure concentrique ; la conduite à combustible gazeux est une conduite intérieure de la structure concentrique, et la conduite à oxygène est une conduite extérieure de la structure concentrique ;
un angle inclus entre la conduite à combustible gazeux et la conduite à oxygène du brûleur monté sur l'un ou l'autre des deux côtés de la couronne à l'intérieur de bassin de fusion est supérieur à 0° et est inférieur ou égal à 5°.

2. Four à bassin pour verre selon la revendication 1, dans lequel l'unité de commande est en outre configurée pour, quand elle détermine un signal de commande pour la vanne de commande de combustible gazeux ou la vanne de commande d'oxygène ou quand elle détermine un signal de commande pour la vanne de commande de combustible gazeux et un signal de commande pour la vanne de commande d'oxygène : quand il est déterminé qu'un rapport de l'écoulement de combustible gazeux sur l'écoulement d'oxygène est supérieur à une plage de rapport prédéfinie, déterminer un signal de commande destiné à diminuer l'ouverture de vanne de la vanne de commande de combustible gazeux ou un signal de commande destiné à augmenter l'ouverture de vanne de la vanne de commande d'oxygène ; quand il est déterminé que le rapport de l'écoulement de combustible gazeux sur l'écoulement d'oxygène est inférieur à la plage de rapport prédéfinie, déterminer un signal de commande destiné à augmenter l'ouverture de vanne de la vanne de commande de combustible gazeux ou un signal de commande destiné à diminuer l'ouverture de vanne de la vanne de commande d'oxygène ; et, quand il est déterminé que le rapport de l'écoulement de combustible gazeux sur l'écoulement d'oxygène est à l'intérieur de la plage de rapport prédéfinie, déterminer un signal de commande destiné à maintenir l'ouverture de vanne de la vanne de commande de combustible gazeux et un signal de commande destiné à maintenir l'ouverture de vanne de la vanne de commande d'oxygène.

3. Four à bassin pour verre selon la revendication 2, dans lequel la plage de rapport prédéfinie est de 1:3 à 1:2.

4. Four à bassin pour verre selon la revendication 1, dans lequel le bassin de fusion est configuré pour être divisé dans les zones suivantes le long d'une direction d'écoulement de verre liquide : une première zone utilisée comme zone de matériau brut, une deuxième zone utilisée comme zone de mousse et une troisième zone utilisée comme zone de clarification ; au moins un brûleur est disposé à une position sur la couronne au-dessus de la première zone ; au moins un brûleur est disposé à une position sur la couronne au-dessus de la deuxième zone ; et au moins un brûleur est disposé à une position sur la couronne au-dessus de la troisième zone.

5. Four à bassin pour verre selon la revendication 1, dans lequel l'unité de commande est en outre configurée pour déterminer un débit de combustible gazeux et un débit d'oxygène conformément à l'écoulement de combustible gazeux et à l'écoulement d'oxygène, et pour ensuite déterminer un signal de commande pour la vanne de commande de combustible gazeux et un signal de commande pour la vanne de commande d'oxygène de telle sorte qu'une différence entre le débit de combustible gazeux et le débit d'oxygène est inférieure à 10 % du débit de combustible gazeux ou du débit d'oxygène.

6. Four à bassin pour verre selon la revendication 1, dans lequel un angle entre une direction d'injection du brûleur et chacune de parois intérieures au niveau de deux côtés du four à bassin pour verre est de 0° à 14°, et un angle entre la direction d'injection du brûleur et chacune d'une paroi avant et d'une paroi arrière du four à bassin pour verre est de 0°.
